# EUROPÄISCHE PATENTSCHRIFT

(11) **EP 4 556 872 B1**
(45) Veröffentlichungstag und Bekanntmachung des Hinweises auf die Patenterteilung: **05.08.2026**
(21) Anmeldenummer: 24182378.0
(22) Anmeldetag: 14.06.2024
(51) Int. Cl.: G01L 19/06, G01L 19/14

(54) **DRUCKSENSOR UND VERFAHREN ZU DESSEN FERTIGUNG**
PRESSURE SENSOR AND METHOD FOR THE PRODUCTION THEREOF
CAPTEUR DE PRESSION ET SON PROCÉDÉ DE FABRICATION

(30) Priorität: 15.11.2023 EP 23210128
(43) Veröffentlichungstag der Anmeldung: 21.05.2025
(73) Patentinhaber: Kistler Holding AG, 8408 Winterthur (CH)
(72) Erfinder: von Bluecher, Fabian, 9323 Steinach (CH); Hehle, Marc, 78464 Konstanz (DE); Hoefler, Julian, 78247 Hilzingen-Riedheim (DE); Brandenberger, Sandro, 8459 Volken (CH)

(56) Entgegenhaltungen:
- EP-B1- 3 285 057
- DE-A1- 102006 033 638
- JP-A- 2007 309 916

## Beschreibung

### Technisches Gebiet

Die Erfindung betrifft einen Drucksensor nach dem Oberbegriff des Anspruches 1 sowie ein Verfahren zu dessen Fertigung nach dem Oberbegriff des Anspruches 10.

### Stand der Technik

Drucksensoren werden in den unterschiedlichsten technischen Anwendungen eingesetzt. Die Schrift WO2006/032152A1 zeigt einen Drucksensor zum Messen eines in einem Druckraum eines Spritzgiesswerkzeuges oder eines Verbrennungsmotors herrschenden Druckes. Der Drucksensor weist ein Gehäuse, einen Stempel und ein Messelement auf. Das Gehäuse weist einen Gehäuseinnenraum auf, in welchem Gehäuseinnenraum der Stempel und das Messelement angeordnet sind. Bezüglich des Messelementes weist der Stempel ein distales Stempelende und ein proximales Stempelende auf. Mit dem proximalen Stempelende steht der Stempel mit dem Messelement in Wirkverbindung. Über das Gehäuse lässt sich der Drucksensor in einer Bohrung einer Wand des Druckraumes befestigen. Im in der Bohrung befestigten Zustand des Drucksensors ragt das distale Stempelende aus dem Gehäuse in den Druckraum. Der zu messende Druck wird vom distalen Stempelende auf das proximale Stempelende übertragen und wirkt auf das Messelement.

Das sich im Druckraum befindende Medium ist bei einem Spritzgiesswerkzeug eine flüssige Schmelze aus Kunststoff, Metall, usw. oder bei einem Verbrennungsmotor ein Kraftstoff-Luft-Gemisch. Das Medium kann eine Temperatur von mehreren hundert °C und einen Druck von mehreren hundert bar haben. Für eine hohe Empfindlichkeit des Drucksensors bei der Messung des Druckes, ist der Stempel bezüglich des Gehäuses beweglich angeordnet, was durch einen Spalt zwischen dem Gehäuse und dem Stempel realisiert ist. Und um zu verhindern, dass das Medium durch den Spalt in den Gehäuseinnenraum gelangt und dort das Messelement beschädigt oder zerstört, lehrt die Schrift WO2006/032152A1, im Spalt eine metallische Ringmembran anzuordnen, welche Ringmembran am Stempel und am Gehäuse durch eine Schweissverbindung angebracht ist und den Spalt abdichtet.

Die Schweissverbindung der Ringmembran stellt allerdings einen Kraftnebenschluss dar, über welchen Kraftnebenschluss ein Teil des zu messenden Druckes vom Stempel in das Gehäuse gelangt und so die Empfindlichkeit des Drucksensors bei der Messung des Druckes reduziert. Insbesondere bei hohen Drücken von über 1000 bar ist die Ringmembran zur Gewährleistung einer hohen Lebensdauer dick ausgestaltet und bildet dann einen merklichen Kraftnebenschluss. Auch bildet die mit dem Gehäuse und dem Stempel verschweisste Ringmembran ein Schwing-System und wird bei der Druckmessung zu Schwingungen angeregt, welche Schwingungen die Messung des Druckes verfälschen können. Schliesslich ist der Ort der Schweissverbindung der Ringmembran im Spalt zwischen Gehäuse und Stempel mit einem Schweisswerkzeug nur schwer zu erreichen, was die Fertigung der Schweissverbindung aufwändig und teuer macht. Die Schrift DE102006033638A2 zeigt eine Druckmessglühkerze mit einem Gehäuse, in dem in einem Innenraum ein Glühstift und ein Drucksensor angeordnet sind. Im in einer Bohrung einer Brennkammer montierten Zustand ragt der Glühstift auf einer länglichen Achse aus dem Innenraum in die Brennkammer. Zur Abstützung in der Brennkammer ist der Glühstift radial von einem Stützrohr umgeben. Der in der Druckkammer herrschende Druck wird als Kraft vom Glühstift und dem Stützrohr über eine radial zur länglichen Achse versetztes Kraftübertragungshülse auf den ebenfalls zur länglichen Achse radial versetzten Drucksensor übertragen. Ein in radialer Richtung Spalt zwischen der Stützrohr und dem Gehäuse wird durch ein Dichtelement abgedichtet, so dass heisse Verbrennungsgase nicht in den Innenraum gelangen können.
Die Schrift EP3285057B1 offenbart einen Drucksensor mit einem Gehäusehülse, einer Membran und einer Sensoranordnung. Die Sensoranordnung ist in der Gehäusehülse angeordnet. Die Membran ist mit einem Ende der Gehäusehülse über eine Schweissverbindung mechanisch verbunden und übertragt den zu messenden Druck von ausserhalb der Gehäusehülse auf die Sensoranordnung.

Eine erste Aufgabe der vorliegenden Erfindung besteht darin, einen Drucksensor bereitzustellen, welcher Drucksensor den zu messenden Druck mit hoher Empfindlichkeit und hoher Genauigkeit misst. Insbesondere soll der Drucksensor auch hohe Drücke von über 1000 bar mit hoher Empfindlichkeit und hoher Genauigkeit messen können. Als weitere Aufgabe soll ein Verfahren zur einfachen und kostengünstigen Fertigung des Drucksensors aufgezeigt werden.

### Darstellung der Erfindung

Zumindest eine der Aufgaben wird durch die Merkmale des Anspruches 1 oder 10 gelöst.

Die Erfindung betrifft einen Drucksensor mit einem Gehäuse, einer Stempeleinheit und einem Messelement; welches Gehäuse einen Gehäuseinnenraum aufweist und welche Stempeleinheit und welches Messelement im Gehäuseinnenraum angeordnet sind; welche Stempeleinheit ein distales Stempelende und ein proximales Stempelende aufweist, welches distale Stempelende auf einer Längsachse des Drucksensors weiter entfernt als das proximale Stempelende vom Messelement angeordnet ist, welches distale Stempelende aus dem Gehäuse ragt und welches proximale Stempelende mit dem Messelement in Wirkverbindung steht und einen ausserhalb des Gehäuses herrschender Druck eines Mediums auf das Messelement überträgt; wobei der Drucksensor eine Hülse aufweist, welche Hülse am Gehäuse befestigt ist; wobei die Hülse und das distale Stempelende durch einen Spalt voneinander beabstandet sind; und wobei der Drucksensor mindestens ein Dichtelement aufweist, welches Dichtelement den Spalt für das Medium zum Gehäuseinnenraum per Dichtpressung abdichtet.

Die Erfindung betrifft auch ein Verfahren zur Fertigung eines Drucksensors, mit einem Gehäuse, einer Stempeleinheit und einem Messelement; welches Gehäuse einen Gehäuseinnenraum aufweist und welche Stempeleinheit und welches Messelement im Gehäuseinnenraum angeordnet sind; welche Stempeleinheit ein distales Stempelende und ein proximales Stempelende aufweist, welches distale Stempelende auf einer Längsachse des Drucksensors weiter entfernt als das proximale Stempelende vom Messelement angeordnet ist und welches distale Stempelende aus dem Gehäuse ragt und welches proximale Stempelende mit dem Messelement in Wirkverbindung steht und einen ausserhalb des Gehäuses herrschender Druck eines Mediums auf das Messelement überträgt; wobei in einem ersten Schritt des Verfahrens das Gehäuse und eine Sensoreinheit mit einer Stempeleinheit und einem Messelement bereitgestellt werden, und dass das Gehäuse entlang der Längsachse über die Stempeleinheit geschoben und auf die Sensoreinheit gesetzt wird; wobei in einem zweiten Schritt des Verfahrens mindestens ein Dichtelement bereitgestellt wird, und dass das Dichtelement entlang der Längsachse über das distale Stempelende geschoben und auf das Gehäuse gesetzt wird; und wobei in einem dritten Schritt des Verfahrens eine Hülse bereitgestellt wird und entlang der Längsachse über das distale Stempelende geschoben und auf das Dichtelement und das Gehäuse gesetzt wird, welche Hülse und welches distale Stempelende durch einen Spalt voneinander beabstandet sind, und welches Dichtelement den Spalt für das Medium zum Gehäuseinnenraum per Dichtpressung abdichtet.

Im Unterschied zur Lehre der Schrift WO2006/032152A1 vermeidet die Erfindung zur Abdichtung des Spaltes zwischen Stempel und Gehäuse einen Kraftnebenschluss. Die Abdichtung des Spaltes erfolgt per Dichtpressung, wodurch der zu messende Druck vom Stempel weitgehend vollständig auf das Messelement übertragen wird und eine hohe Empfindlichkeit und hohe Genauigkeit bei der Messung des Druckes erzielt wird.

Vorteilhafte Weiterbildungen des Erfindungsgegenstandes werden in den abhängigen Ansprüchen beansprucht.

In einer vorteilhaften Weiterbildung ist das Dichtelement torusförmig und besteht aus elastisch dichtendem Material wie Elastomer, insbesondere aus Fluorelastomer oder aus Perfluorelastomer, oder aus Kautschuk, insbesondere aus Acrylnitril-Butadien-Kautschuk.

Im weiteren Unterschied zur Lehre der Schrift WO2006/032152A1 stellt das Dichtelement aus elastischem Material kein Schwing-System dar, welches bei der Druckmessung zu Schwingungen anregbar ist, welche Schwingungen die Messung des Druckes verfälschen können. Die Vermeidung solcher Schwingungen ermöglicht die Messung des Druckes mit hoher Empfindlichkeit und hoher Genauigkeit.

In einer weiteren vorteilhaften Weiterbildung wird im dritten Schritt des Verfahrens durch das Aufsetzen der Hülse auf das Gehäuse um das Dichtelement bezüglich der Längsachse radial innenseitig an der Hülse und am Gehäuse eine Nut gebildet.

Eine solche Fertigung einer Nut zur Beherbergung des Dichtelementes ist einfach und kostengünstig.

In einer weiteren vorteilhaften Weiterbildung weist die Nut mehrere Nutenwände auf; wobei die Nutenwände eine Vorpressung auf das in der Nut angeordnete Dichtelement ausüben; und wobei der Druck im Spalt zusätzlich zur Vorpressung als Druckpressung auf das Dichtelement wirkt, welche Vorpressung und welche Druckpressung die Dichtpressung bilden.

Durch die zweistufige Abdichtung durch eine Vorpressung und eine Druckpressung wird sichergestellt, dass auch bei niedrigem Druck kein Medium durch den Spalt in den Gehäuseinnenraum gelangt und dort das Messelement beschädigt oder zerstört. Die Fertigung der das Dichtelement vorspannenden Nut ist einfach und kostengünstig.

In noch einer weiteren vorteilhaften Weiterbildung ist die Nut im Querschnitt rechteckig oder dreieckig oder trapezförmig oder rund oder halbrund.

Durch diese im Querschnitt unterschiedlichen Geometrien lässt sich die Grösse der von den Nutenwänden auf das torusförmige Dichtelement ausgeübten Vorpressung einstellen. Für ein Dichtelement mit gegebenen Abmessungen wird mit bezüglich der Längsachse schrägen Nutenwänden oder mit bezüglich der Längsachse in die Hülse oder das Gehäuse gewölbten runden Nutenwänden im Vergleich zu bezüglich der Längsachse geraden Nutenwänden eine höhere Vorpressung erzielt. Somit lässt sich der Drucksensor auch bei hohen Drücken von über 1000 bar betreiben, ohne dass Medium durch den Spalt in den Gehäuseinnenraum gelangt. Die Fertigung der unterschiedlichen Geometrien der Nut ist einfach und kostengünstig.

Nach Ansprüchen 1 und 10 weist die Stempeleinheit eine Vorspannhülse und einen Vorspannkörper auf; wobei das proximale Stempelende in die Vorspannhülse übergeht; wobei die Vorspannhülse einen Vorspannhülsenraum umschliesst, in welchem Vorspannhülsenraum das Messelement angeordnet ist; wobei ein vom proximalen Stempelende abgewandtes Ende der Vorspannhülse über eine stoffschlüssige Vorspannhülse-Vorspannkörper-Verbindung am Vorspannkörper befestigt ist; und wobei das Messelement auf der Längsachse zwischen dem proximalen Stempelende und dem Vorspannkörper unter mechanischer Vorspannung angeordnet ist.

Durch diese Weiterbildung wird verhindert, dass mechanische Verspannungen, welche von der Befestigung des Drucksensors in der Wandung des Druckraumes stammen, vom Gehäuse zum Messelement gelangen und die Messung des Druckes verfälschen können. Die Verhinderung der Übertragung von solche mechanischen Verspannungen erhöht die Empfindlichkeit und Genauigkeit der Messung des Druckes.

### Kurze Beschreibung der Zeichnungen

Im Folgenden wird die Erfindung beispielhaft anhand mehrerer Ausführungsformen unter Beizug der Figuren näher erklärt. Es zeigen
- Fig. 1: einen Querschnitt durch einen Teil eines erfindungsgemässen Drucksensors 1, mit einer Sensoreinheit 10, einem Gehäuse 20, einer Hülse 30 und einem Dichtelement 40 in einer rechteckigen Nut 50;
- Fig. 2: einen Querschnitt durch einen Teil eines erfindungsgemässen Drucksensors 1, mit einer Sensoreinheit 10, einem Gehäuse 20, einer Hülse 30 und einem Dichtelement 40 in einer dreieckigen Nut 50;
- Fig. 3: einen Querschnitt durch einen Teil eines erfindungsgemässen Drucksensors 1, mit einer Sensoreinheit 10, einem Gehäuse 20, einer Hülse 30 und einem Dichtelement 40 in einer trapezförmigen Nut 50;
- Fig. 4: einen Querschnitt durch einen Teil eines erfindungsgemässen Drucksensors 1, mit einer Sensoreinheit 10, einem Gehäuse 20, einer Hülse 30 und einem Dichtelement 40 in einer runden Nut 50;
- Fig. 5: einen Querschnitt durch einen Teil eines erfindungsgemässen Drucksensors 1, mit einer Sensoreinheit 10, einem Gehäuse 20, einer Hülse 30 und einem Dichtelement 40 in einer halbrunden Nut 50;
- Fig. 6: einen Querschnitt durch einen Teil eines erfindungsgemässen Drucksensors 1, mit einer Sensoreinheit 10, einem Gehäuse 20, einer Hülse 30 und einem Dichtelement 40 in einer halbrunden Nut 50;
- Fig. 7: einen Querschnitt durch die Sensoreinheit 10 des erfindungsgemäss Drucksensors 1 gemäss der Fig. 1 bis 6;
- Fig. 8: eine Explosionsdarstellung eines Teils der Bestandteile des erfindungsgemässen Drucksensors 1 gemäss der Fig. 1 bis 6, mit der Sensoreinheit 10, dem Gehäuse 20, der Hülse 30 und dem Dichtelement 40;
- Fig. 9: eine Ansicht eines ersten Schrittes des erfindungsgemässen Verfahrens der Fertigung des erfindungsgemässen Drucksensors 1 gemäss der Fig. 1 bis 6, wo das Gehäuse 20 auf die Sensoreinheit 10 gesetzt wird;
- Fig. 10: eine Ansicht eines zweiten Schrittes des erfindungsgemässen Verfahrens der Fertigung des erfindungsgemässen Drucksensors 1 gemäss Fig. 9, wo das Dichtelement 40 auf das Gehäuse 20 gesetzt wird; und
- Fig. 11: eine Ansicht eines dritten Schrittes des erfindungsgemässen Verfahrens der Fertigung des erfindungsgemässen Drucksensors 1 gemäss Fig. 10, wo die Hülse 30 auf das Dichtelement 40 und das Gehäuse 20 gesetzt wird.

Gleiche Bezugszeichen bezeichnen in den Figuren gleiche Gegenstände.

### Wege zur Ausführung der Erfindung

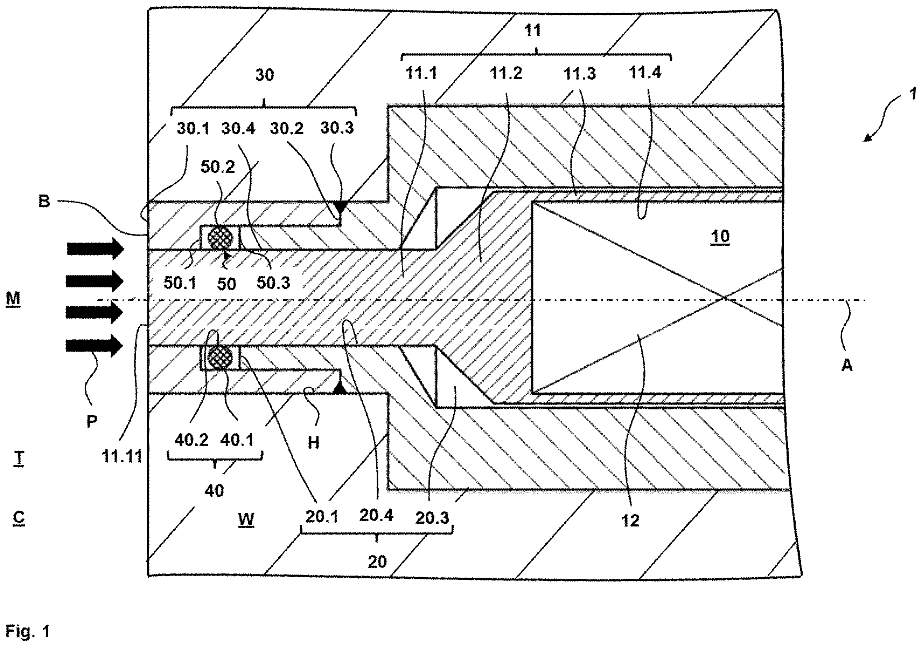

Die Fig. 1 bis 6 zeigen Querschnitte durch mehrere Ausführungsformen eines Teiles eines erfindungsgemässen Drucksensors 1. Der Drucksensor 1 hat die Funktion, den Druck P eines Mediums M in einem Druckraum C zu messen. Der Druckraum C kann sich in einem Spritzgiesswerkzeug, in einem Verbrennungsmotor, usw. befinden. Bei einem Spritzgiesswerkzeug ist das Medium M eine flüssige Schmelze aus Kunststoff, Metall, usw. Bei einem Verbrennungsmotor ist das Medium M ein Kraftstoff-Luft-Gemisch. Das Medium M kann eine Temperatur T von mehreren hundert °C und einen Druck P von mehreren tausend bar haben. Vorzugsweise liegt die Temperatur T im Bereich von 100 °C bis 500 °C und der Druck P liegt im Bereich von 50 bar bis 5000 bar. Der zu messende Druck P ist in den Fig. 1 bis 6 schematisch als schwarze Pfeile dargestellt.

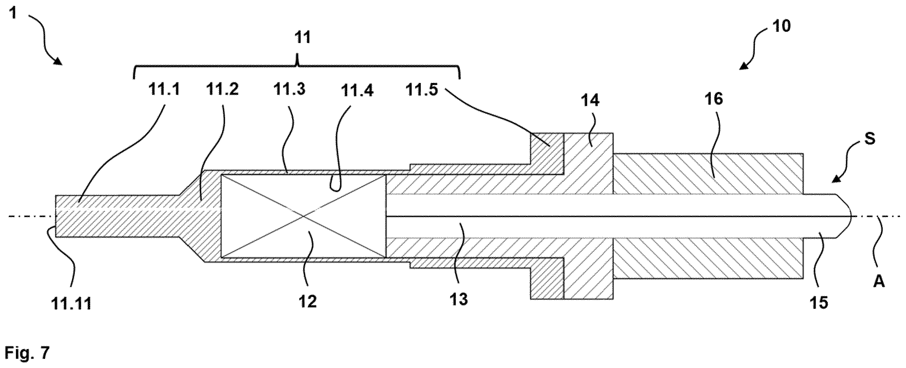

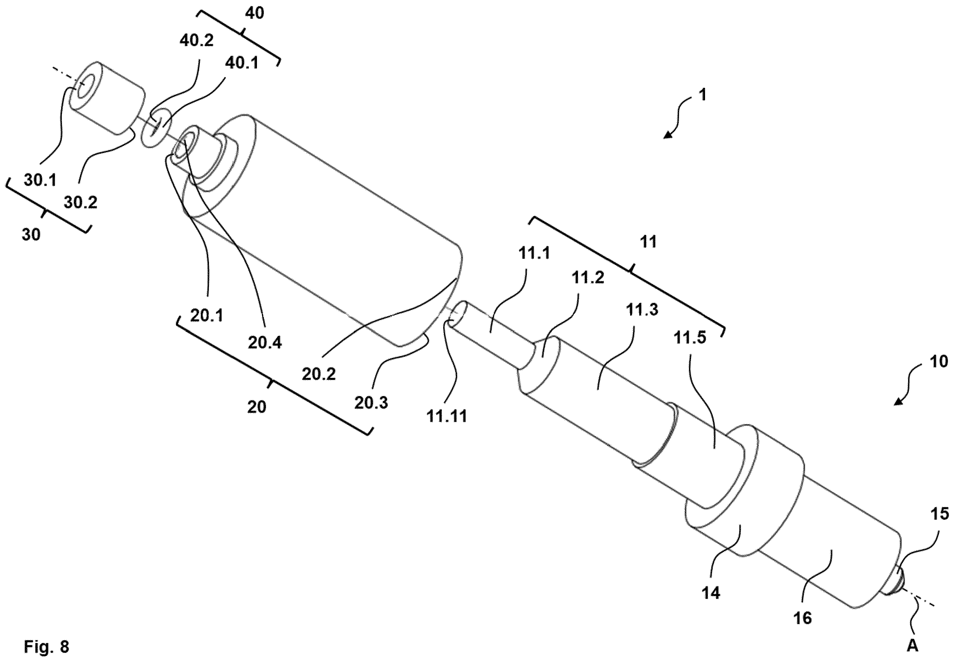

Der Drucksensor 1 weist eine Sensoreinheit 10 auf. Die Sensoreinheit 10 hat die Funktion, ein Messelement 12 zu beherbergen. Die Sensoreinheit 10 ist in den Fig. 1 bis 6 nur teilweise dargestellt, dafür ist die Sensoreinheit 10 im Querschnitt der Fig. 7 und in der Explosionsdarstellung der Fig. 8 vollständig dargestellt.

Der Drucksensor 1 weist eine Längsachse A auf. Die Fig. 1 bis 8 zeigen den Drucksensor 1 entlang der Längsachse A.

Der Drucksensor 1 weist ein Gehäuse 20 auf. Das Gehäuse 20 hat die Funktion, die Sensoreinheit 10 in einer Bohrung H einer Wandung W des Druckraumes C zu befestigen. Die Befestigung des Drucksensors 1 über das Gehäuse 20 in der Bohrung H kann eine Schraubverbindung sein. Die Schraubverbindung ist figürlich nicht dargestellt.

In den figürlich dargestellten Ausführungsformen ist das Gehäuse 20 hohlzylinderförmig und besteht aus mechanisch beständigem Material wie aus Reinmetallen, Nickellegierungen, Kobaltlegierungen, Eisenlegierungen, usw. Wie gut in Fig. 8 zu erkennen ist, weist das Gehäuse 20 ein distales Gehäuseende 20.1 und ein proximales Gehäuseende 20.2 auf, welches distale Gehäuseende 20.1 entlang der Längsachse A weiter entfernt als das proximale Gehäuseende 20.2 vom Messelement 12 angeordnet ist. Das Gehäuse 20 weist einen Gehäuseinnenraum 20.3 auf. Bezüglich der Längsachse A umschliesst das Gehäuse 20 den Gehäuseinnenraum 20.3 radial. Im Gehäuseinnenraum 20.3 ist die Sensoreinheit 10 angeordnet.

Zusätzlich zum Messelement 12 weist die Sensoreinheit 10 eine Stempeleinheit 11 auf.

Die Stempeleinheit 11 hat die erste Funktion, den zu messenden Druck P aufzunehmen und auf das Messelement 12 zu übertragen. Dazu weist die Stempeleinheit 11 ein distales Stempelende 11.1, ein proximales Stempelende 11.2 und eine Vorspannhülse 11.3 auf. Die Stempeleinheit 11 besteht aus mechanisch beständigem Material wie aus Reinmetallen, Nickellegierungen, Kobaltlegierungen, Eisenlegierungen, usw. In den figürlich dargestellten Ausführungsformen sind das distale Stempelende 11.1, das proximale Stempelende 11.2 und die Vorspannhülse 11.3 einstückig. Dabei sind das distale Stempelende 11.1 und das proximale Stempelende 11.2 zylinderförmig und gehen ineinander über. Das proximale Stempelende 11.2 geht in die Vorspannhülse 11.3 über. Die Vorspannhülse 11.3 ist hohlzylinderförmig und umschliesst einen Vorspannhülsenraum 11.4. Im Vorspannhülsenraum 11.4 ist das Messelement 12 angeordnet. Das distale Stempelende 11.1 ist auf der Längsachse A weiter entfernt als das proximale Stempelende 11.2 vom Messelement 12 angeordnet. Das distale Stempelende 11.1 weist an seinem Ende eine Stirnfläche auf, welche auch Druckaufnahmefläche 11.11 genannt wird. Der zu messende Druck P wirkt über die Druckaufnahmefläche 11.11 auf das distale Stempelende 11.1 und wird vom distalen Stempelende 11.1 auf das proximale Stempelende 11.2 übertragen. Vom proximalen Stempelende 11.2 wirkt der zu messende Druck P dann direkt auf das Messelement 12.

Die Stempeleinheit 11 hat die weitere Funktion zu verhindern, dass mechanische Verspannungen, welche von der Befestigung des Drucksensors 1 in der Bohrung H der Wandung W des Druckraumes C stammen, nicht vom Gehäuse 20 zum Messelement 12 gelangen, denn solche mechanische Verspannungen können die Messung des Druckes P verfälschen. Dazu weist die Stempeleinheit 11 einen Vorspannkörper 11.5 auf. In der figürlich dargestellten Ausführungsform ist der Vorspannkörper 11.5 hohlzylinderförmig. Ein vom proximalen Stempelende 11.2 abgewandtes Ende der Vorspannhülse 11.3 ist am Vorspannkörper 11.5 befestigt. Durch die Befestigung ist das Messelement 12 auf der Längsachse A zwischen dem proximalen Stempelende 11.2 und dem Vorspannkörper 11.5 unter mechanischer Vorspannung angeordnet. Der Ausdruck "mechanische Vorspannung" besagt, dass die mechanische Vorspannung vor der eigentlichen Messung des Druckes P gebildet wird. Vorzugsweise ist ein Betrag der mechanischen Vorspannung um mindestens eine dezimale Grössenordnung grösser als mögliche mechanische Verspannungen von der Befestigung des Drucksensors 1 über das Gehäuse 20 in der Wandung W des Druckraumes C.

Die Vorspannhülse 11.3 ist dünnwandig mit einer Wandstärke von kleiner/gleich 0.1 mm. Die dünnwandige Vorspannhülse 11.3 ermöglicht eine grosse Beweglichkeit des Stempels 11 und somit eine hohe Empfindlichkeit des Drucksensors 1. Ein Eindringen von Medium M mit hoher Temperatur T und hohem Druck P durch den Spalt 30.4 in den Gehäuseinnenraum 20.3 gilt es zu verhindern. Bei einem Spritzgiesswerkzeug ist das Medium M eine flüssige Schmelze, welche flüssige Schmelze im Gehäuseinnenraum 20.3 aushärten und so die Beweglichkeit des Stempels 11 verhindern würde. Bei einem Verbrennungsmotor ist das Medium M ein Kraftstoff-Luft-Gemisch, welches Kraftstoff-Luft-Gemisch chemisch aggressiv ist und im Gehäuseinnenraum 20.3 die Vorspannhülse 11.3 korrodieren und somit beschädigen oder zerstören würde.

Das Messelement 12 hat die Funktion für den zu messenden Druck P ein Messsignal S zu erzeugen. Das Messelement 12 kann ein piezoelektrisches Messelement, ein piezoresistives Messelement, ein Dehnungsmessstreifen, usw. sein. Eine Grösse des Messsignals S ist proportional zum gemessenen Druck P.

Die Sensoreinheit 10 weist auch eine Elektrodenanordnung 13, eine Buchseneinheit 14, einen Buchsenkontakt 15 und einen Isolationskörper 16 auf.

Die Buchseneinheit 14 hat die Funktion, die Elektrodenanordnung 13, den Buchsenkontakt 15 und den Isolationskörper 16 zu beherbergen. Dazu weist die Buchseneinheit 14 ein hohlzylinderförmiges Buchsengehäuse aus mechanisch beständigem Material wie aus Reinmetallen, Nickellegierungen, Kobaltlegierungen, Eisenlegierungen, usw. auf. Das Buchsengehäuse ist über eine Buchsengehäuse-Vorspannkörper-Verbindung auf der vom Messelement 12 abgewandten Seite des Vorspannkörpers 11.5 am Vorspannkörper 11.5 befestigt. Im Inneren des Buchsengehäuses weist die Buchseneinheit 14 einen Buchsenraum auf. Im Buchsenraum sind die Elektrodenanordnung 13, der Buchsenkontakt 15 und der Isolationskörper 16 angeordnet.

Die Elektrodenanordnung 13 hat die Funktion, das Messsignal S vom Messelement 12 zum Buchsenkontakt 15 abzuleiten. In der figürlich dargestellten Ausführungsform der Sensoreinheit 10 ist die Elektrodenanordnung 13 zylinderförmig und besteht aus elektrisch leitfähigem Material wie aus Kupfer, Silber, Gold, usw. Die Elektrodenanordnung 13 ist am dem Messelement 12 zugewandten Ende der Buchseneinheit 14 angeordnet und erstreckt sich aus dem Buchsenraum in den Vorspannhülsenraum 11.4. Die Elektrodenanordnung 13 ist elektrisch mit dem Messelement 12 verbunden. Die Elektrodenanordnung 1 leitet das Messsignal S vom Messelement 12 entlang der Längsachse A zum Buchsenkontakt 15 ab.

Der Buchsenkontakt 15 hat die Funktion, das Messsignal S ausserhalb des Buchseneinheit 14 zur Verfügung zu stellen. In der figürlich dargestellten Ausführungsform ist der Buchsenkontakt 15 zylinderförmig und besteht aus elektrisch leitfähigem Material wie aus Kupfer, Silber, Gold, usw. Der Buchsenkontakt 15 ist am vom Messelement 12 abgewandten Ende der Buchseneinheit 14 angeordnet. Die Elektrodenanordnung 13 und der Buchsenkontakt 15 sind elektrisch miteinander verbunden.

Der Isolationskörper 16 hat die Funktion, die Elektrodenanordnung 13 und den Buchsenkontakt 15 elektrisch gegenüber dem Buchsengehäuse zu isolieren. Der Isolationskörper 16 ist hohlzylinderförmig und besteht aus elektrisch isolierendem und mechanisch steifem Material wie Keramik, Al₂O₃-Keramik, Saphir, usw. Bezüglich der Längsachse A ist der Isolationskörper 16 radial ausserhalb der Elektrodenanordnung 13 und des Buchsenkontaktes 15 angeordnet.

Somit sind die Stempeleinheit 11 und das Messelement 12 als Bestandteil der Sensoreinheit 10 im Gehäuseinnenraum 20.3 angeordnet. Das distale Stempelende 11.1 ragt aus dem Gehäuse 20. Gemäss Fig. 1 weist das distale Gehäuseende 20.1 eine Gehäuseöffnung 20.4 auf. Das distale Stempelende 11.1 ragt durch die Gehäuseöffnung 20.4 bis zum Druckraum C.

Erfindungsgemäss weist der Drucksensor 1 eine Hülse 30 auf. Die Hülse 30 hat die Funktion, mindestens ein Dichtelement 40 zu beherbergen. Die Hülse 30 ist hohlzylinderförmig und besteht aus mechanisch beständigem Material wie aus Reinmetallen, Nickellegierungen, Kobaltlegierungen, Eisenlegierungen, usw. In den figürlich dargestellten Ausführungsformen weist die Hülse 30 ein distales Hülsenende 30.1 und ein proximales Hülsenende 30.2 auf, welches distale Hülsenende 30.1 entlang der Längsachse A weiter entfernt als das proximale Hülsenende 30.2 vom Messelement 12 angeordnet ist.

Vorzugsweise ragt das distale Stempelende 11.1 bis zum distalen Hülsenende 30.1. Die Druckaufnahmefläche 11.11 und das distale Hülsenende 30.1 liegen in einer Druckaufnahmeebene B senkrecht zur Längsachse A. Dies hat den einen Vorteil, dass der Druck P nur parallel zur Längsachse A über die Druckaufnahmefläche 11.11 auf das distale Stempelende 11.1 wirken kann. Somit wird verhindert, dass eine nicht-parallel zur Längsachse A wirkende Druckkomponente auf das distale Stempelende 11.1 wirkt, was die Messung des Druckes P verfälschen kann, wenn das Messelement 12 für solch eine nicht-parallel zur Längsachse A wirkende Druckkomponente Störsignale erzeugt. Die Vermeidung einer solchen nicht-parallel zur Längsachse A wirkenden Druckkomponente erhöht die Empfindlichkeit und Genauigkeit der Messung des Druckes P. Alternativ hat dies den Vorteil, dass sich das distale Stempelende 11.1 und das distale Hülsenende 30.1 durch Ablängen gezielt auf die Oberflächengeometrie der Wandung W des Druckraumes C anpassen lassen. Das distale Stempelende 11.1 und das distale Hülsenende 30.1 lassen sich somit auf eine schräg oder gekrümmt zur Längsachse A verlaufende Oberflächengeometrie der Wandung W des Druckraumes C ablängen.

Die Hülse 30 ist am Gehäuse 20 befestigt. Vorzugsweise ist die Hülse 30 am proximalen Hülsenende 30.2 über eine Hülse-Gehäuse-Verbindung 30.3 am distalen Gehäuseende 20.1 befestigt. Bezüglich der Längsachse A ist die Hülse-Gehäuse-Verbindung 30.3 radial aussenseitig am proximalen Hülsenende 30.2 und am distalen Gehäuseende 20.1 angeordnet. Die Hülse-Gehäuse-Verbindung 30.3 erfolgt durch Schweissen, Löten, Verschrauben, Verpressen, Verkleben, usw. In den figürlich dargestellten Ausführungsformen ist die Hülse-Gehäuse-Verbindung 30.3 eine Schweissverbindung.

Die Hülse 30 umschliesst das distale Stempelende 11.1 bereichsweise. Bezüglich der Längsachse A umschliesst die Hülse 30 das distale Stempelende 11.1 radial aussenseitig. Das distale Stempelende 11.1 weist eine Mantelfläche auf. Vorzugsweise umschliesst die Hülse 30 die Mantelfläche des distalen Stempelendes 11.1 radial aussenseitig in einem Winkel von 360°.

Die Hülse 30 und das distale Stempelende 11.1 sind durch einen Spalt 30.4 voneinander beabstandet. Vorzugsweise weist der Spalt 30.4 in radialer Richtung senkrecht zur Längsachse A eine Breite von kleiner/gleich 0.1 mm auf.

Die Hülse 30 und Gehäuse 20 bilden mindestens eine Nut 50. Die Nut 50 dient der Beherbergung des Dichtelementes 40. Vorzugsweise ist die Nut 50 im Bereich des proximalen Hülsenendes 30.2 und des distalen Gehäuseendes 20.1 angeordnet. Das Dichtelement 40 ist in der Nut 50 angeordnet.

Entlang der Längsachse A kann die Hülse 30 eine Länge von mehreren cm aufweisen. Die Nut 50 und das Dichtelement 40 befinden sich dann in einer relativ grossen Entfernung von mehreren cm zum Druckraum C. Dies hat den Vorteil, dass bei einem Medium M mit hoher Temperatur T das Dichtelement 40 im Betrieb des Drucksensors 1 nicht der hohen Temperatur T des Mediums M ausgesetzt ist, da die Temperatur T in der Wandung W und somit auch in der Hülse 30 mit steigender Entfernung zum Druckraum C abnimmt.

Entlang der Längsachse A s kann die Hülse 30 aber auch eine Länge von nur einigen mm aufweisen. Die Nut 50 und das Dichtelement 40 befinden sich dann in einer relativ geringen Entfernung von einigen mm zum Druckraum C. Dies hat den Vorteil, dass ein Medium M mit niedriger Viskosität entlang der Längsachse A nicht weit in den Spalt 30.4 eindringen kann, bevor es auf das Dichtelement 40 stösst.

Die Nut 50 ist bezüglich der Längsachse A radial innenseitig an der Hülse 30 und am Gehäuse 20 angeordnet. Die Nut 50 ist ringförmig. Die Nut 50 weist mehrere Nutenwände 50.1, 50.2, 50.3 auf. Mindestens eine der Nutenwände 50.1, 50.2, 50.3 ist Teil des proximalen Hülsenendes 30.2. Mindestens eine der Nutenwände 50.1, 50.2, 50.3 ist Teil des distalen Gehäuseendes 20.1.

In der Ausführungsform des Drucksensors 1 gemäss Fig. 1 ist die Nut 50 im Querschnitt rechteckig und weist drei Nutenwände 50.1, 50.2, 50.3 auf. Von den drei Nutenwänden 50.1, 50.2, 50.3 sind eine erste Nutenwand 50.1 und eine zweite Nutenwand 50.2 Teil des proximalen Hülsenendes 30.2 und eine dritte Nutenwand 50.3 ist Teil des distalen Gehäuseendes 20.1. Die erste Nutenwand 50.1 und die dritte Nutenwand 50.3 sind gerade und in einem Winkel von 90° zur Längsachse A angeordnet, die zweite Nutenwand 50.2 ist gerade und parallel zur Längsachse A angeordnet.

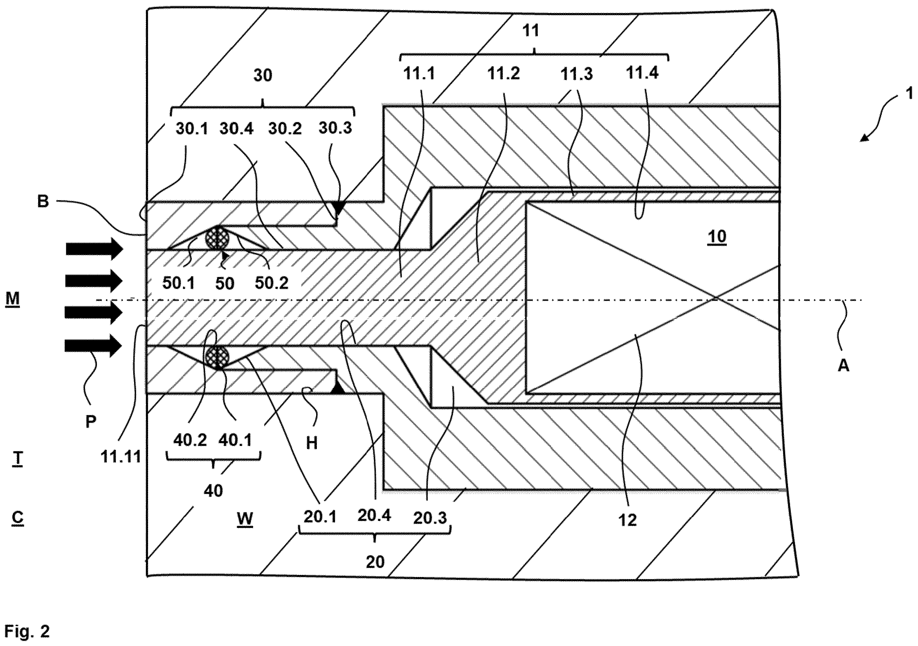

In der Ausführungsform des Drucksensors 1 gemäss Fig. 2 ist die Nut 50 im Querschnitt dreieckig und weist zwei Nutenwände 50.1, 50.2 auf. Von den zwei Nutenwänden 50.1, 50.2 ist eine erste Nutenwand 50.1 Teil des proximalen Hülsenendes 30.2 und eine zweite Nutenwand 50.2 ist Teil des distalen Gehäuseendes 20.1. Die erste Nutenwand 50.1 und die zweite Nutenwand 50.2 sind schräg zur Längsachse A angeordnet. Vorzugsweise sind die erste Nutenwand 50.1 und die zweite Nutenwand 50.2 in einem Winkel von 30° zur Längsachse A angeordnet. Die zwei schrägen Nutenwände 50.1, 50.2 erlauben eine genaue Positionierung des Dichtelementes 40 in der Nut 50.

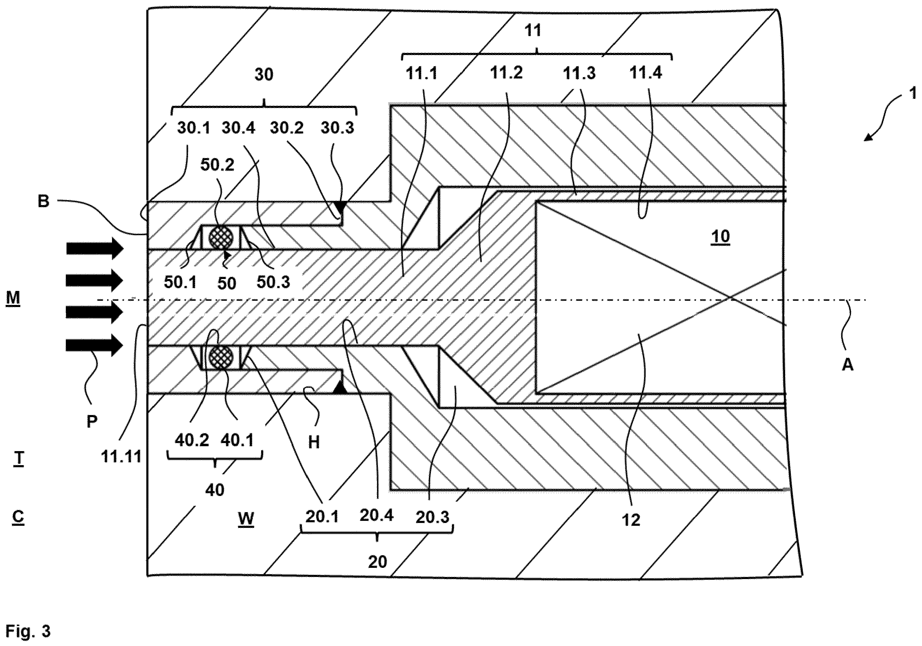

In der Ausführungsform des Drucksensors 1 gemäss Fig. 3 ist die Nut 50 im Querschnitt trapezförmig und weist drei Nutenwände 50.1, 50.2, 50.3 auf. Von den drei Nutenwänden 50.1, 50.2, 50.3 sind eine erste Nutenwand 50.1 und eine zweite Nutenwand 50.2 Teil des proximalen Hülsenendes 30.2 und eine dritte Nutenwand 50.3 ist Teil des distalen Gehäuseendes 20.1. Die erste Nutenwand 50.1 und die dritte Nutenwand 50.3 sind schräg zur Längsachse A angeordnet, die zweite Nutenwand 50.2 ist gerade und parallel zur Längsachse A angeordnet. Vorzugsweise sind die erste Nutenwand 50.1 und die dritte Nutenwand 50.3 in einem Winkel von 30° zur Längsachse A angeordnet.

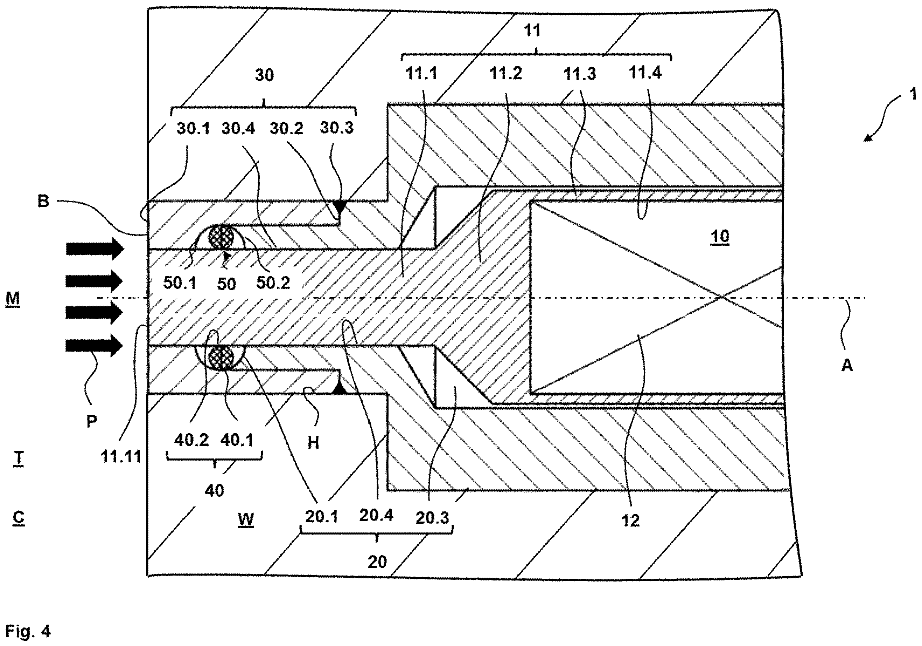

In der Ausführungsform des Drucksensors 1 gemäss Fig. 4 ist die Nut im Querschnitt rund und weist zwei Nutenwände 50.1, 50.2 auf. Von den zwei Nutenwänden 50.1, 50.2 ist eine erste Nutenwand 50.1 Teil des proximalen Hülsenendes 30.2 und eine zweite Nutenwand 50.2 ist Teil des distalen Gehäuseendes 20.1. Die erste Nutenwand 50.1 ist rund und von der Längsachse A in das proximale Hülsenende 30.2 gewölbt. Vorzugsweise weist die Wölbung einen konstanten Radius auf. Die zweite Nutenwand 50.2 ist rund und von der Längsachse A in das distale Gehäuseende 20.1 gewölbt. Vorzugsweise weist die Wölbung einen konstanten Radius auf. Die zwei runden Nutenwände 50.1, 50.2 erlauben eine genaue Positionierung des Dichtelementes 40 in der Nut 50.

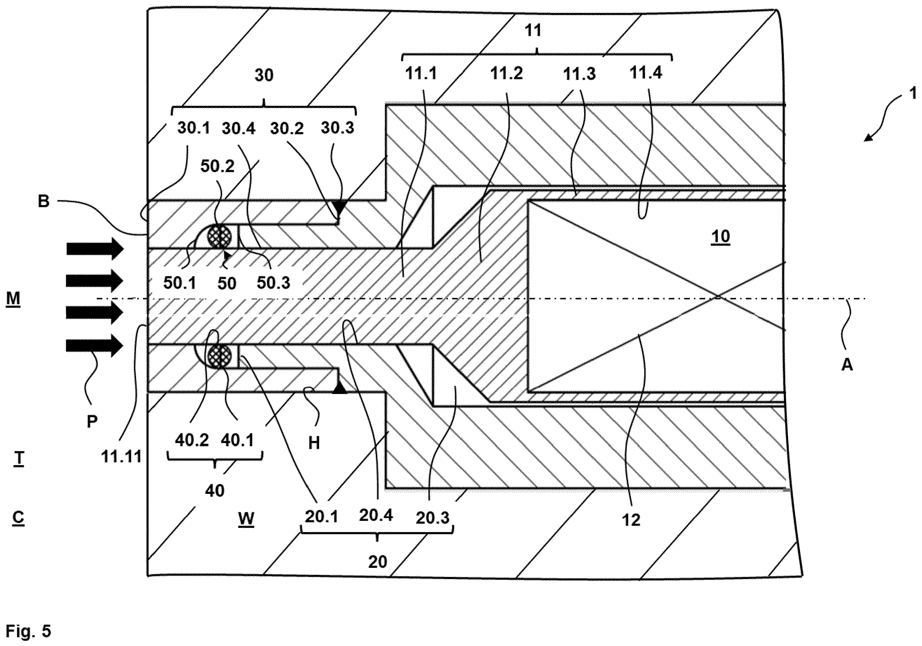

In der Ausführungsform des Drucksensors 1 gemäss Fig. 5 ist die Nut halbrund und weist drei Nutenwände 50.1, 50.2, 50.3 auf. Von den drei Nutenwänden 50.1, 50.2, 50.3 sind eine erste Nutenwand 50.1 und eine zweite Nutenwand 50.2 Teil des proximalen Hülsenendes 30.2 und eine dritte Nutenwand 50.3 ist Teil des distalen Gehäuseendes 20.1. Die erste Nutenwand 50.1 ist rund und von der Längsachse A in das proximale Hülsenende 30.2 gewölbt. Vorzugsweise weist die Wölbung einen konstanten Radius auf. Die zweite Nutenwand 50.2 ist gerade und parallel zur Längsachse A angeordnet. Die dritte Nutenwand 50.3 ist gerade und in einem Winkel von 90° zur Längsachse A angeordnet.

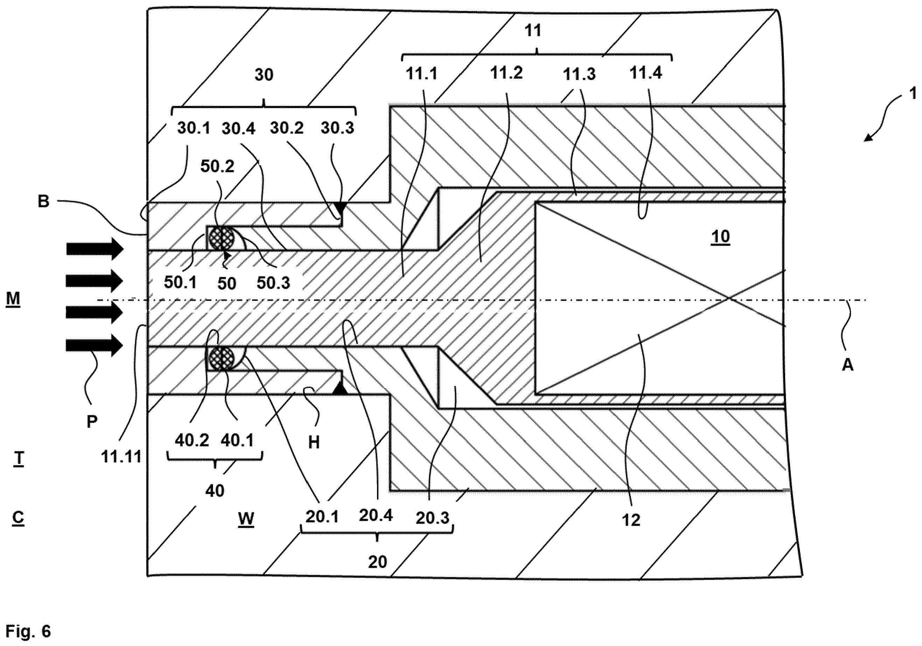

In der Ausführungsform des Drucksensors 1 gemäss Fig. 6 ist die Nut halbrund und weist drei Nutenwände 50.1, 50.2, 50.3 auf. Von den drei Nutenwänden 50.1, 50.2, 50.3 sind eine erste Nutenwand 50.1 und eine zweite Nutenwand 50.2 Teil des proximalen Hülsenendes 30.2 und eine dritte Nutenwand 50.3 ist Teil des distalen Gehäuseendes 20.1. Die erste Nutenwand 50.1 ist gerade und in einem Winkel von 90° zur Längsachse A angeordnet. Die zweite Nutenwand 50.2 ist gerade und parallel zur Längsachse A angeordnet. Die dritte Nutenwand 50.3 ist rund und von der Längsachse A in das distale Gehäuseende 20.1 gewölbt. Vorzugsweise weist die Wölbung einen konstanten Radius auf.

Bei Kenntnis der vorliegenden Erfindung kann der Fachmann die in den Fig. 1 bis 6 dargestellten sechs Ausführungsformen der Nut auch miteinander kombinieren.

Erfindungsgemäss weist der Drucksensor 1 mindestens ein Dichtelement 40 auf. Das Dichtelement 40 hat die Funktion, den Spalt 30.4 abzudichten. Im Sinne der Erfindung hat das Verb "abdichten" die Bedeutung, dass im Betrieb des Drucksensors 1 kein Medium M durch den Spalt 30.4 in den Gehäuseinnenraum 20.3 gelangen kann. Vorzugsweise dichtet das Dichtelement 40 den Spalt 30.4 dauerhaft bei einer Temperatur im Bereich von 100 °C bis 500 °C sowie bei einem Druck P im Bereich von 50 bar bis 5000 bar ab. Das Dichtelement 40 ist torusförmig und besteht aus elastisch dichtendem Material wie aus Elastomer, insbesondere aus Fluorelastomer oder aus Perfluorelastomer, aus Kautschuk, insbesondere aus Acrylnitril-Butadien-Kautschuk, usw.

In den figürlich dargestellten Ausführungsformen weist das Dichtelement 40 einen torusförmigen Dichtkörper 40.1 und eine Torusöffnung 40.2 auf. Der torusförmige Dichtkörper 40.1 umschliesst die Torusöffnung 40.2. Das distale Stempelende 11.1 ragt durch die Torusöffnung 40.2.

Das Dichtelement 40 ist in der Nut 50 angeordnet. Das Dichtelement 40 dichtet den Spalt 30.4 durch Dichtpressung. Die Dichtpressung kann als axiale Dichtpressung entlang der Längsachse A, oder als radiale Dichtpressung senkrecht zur Längsachse A, oder als eine Kombination aus axialer Dichtpressung entlang der Längsachse A und radialer Dichtpressung senkrecht zur Längsachse A erfolgen. Das Dichtelement 40 ist mit einer Vorpressung in der Nut 50 angeordnet. Die Vorpressung wird von den Nutenwände 50.1, 50.2, 50.3 auf das Dichtelement 40 ausgeübt. Zusätzlich zu Vorpressung wirkt der Druck P im Spalt 30.4 als Druckpressung auf das Dichtelement 40. Die Dichtpressung wird somit von der Vorpressung und der Druckpressung gebildet.

Bei Kenntnis der vorliegenden Erfindung kann der Fachmann auch mehrere Dichtelemente in einer Nut oder in mehreren Nuten anordnen. Bezüglich der Längsachse A sind die Mehrzahl der Dichtelemente dann hintereinander angeordnet und dichten den Spalt 30.4 dann mehrmals ab.

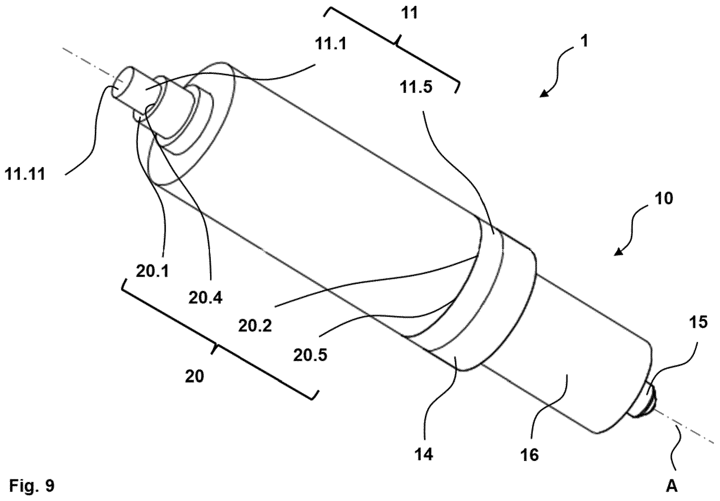

Die Fig. 9 bis 11 zeigen in Ansichten drei Schritte des erfindungsgemässen Verfahrens zur Fertigung des Drucksensors 1. Auch die Ansichten der Fig. 9 bis 11 zeigen den Drucksensor 1 entlang einer Längsachse A des Drucksensors 1.

In einem ersten Schritt des erfindungsgemässen Verfahrens gemäss Fig. 9 werden ein Gehäuse 20 und eine Sensoreinheit 10 bereitgestellt und das Gehäuse 20 wird entlang der Längsachse A über die Stempeleinheit 11 geschoben und auf die Sensoreinheit 10 gesetzt. Dadurch gerät die Stempeleinheit 11 in den Gehäuseinnenraum 20.3. Das distale Stempelende 11.1 ragt dadurch durch die Gehäuseöffnung 20.4. Das proximale Gehäuseende 20.2 sitzt auf dem Vorspannkörper 11.5. Das so auf den Vorspannkörper 11.5 gesetzte Gehäuse 20 wird über eine Gehäuse-Vorspannkörper-Verbindung 20.5 am Vorspannkörper 11.5 befestigt. Bezüglich der Längsachse A ist die Gehäuse-Vorspannkörper-Verbindung 20.5 radial aussenseitig am Gehäuse 20 und am Vorspannkörper 11.5 angeordnet. Die Gehäuse-Vorspannkörper-Verbindung 20.5 erfolgt durch Schweissen, Löten, Verschrauben, usw. In den figürlich dargestellten Ausführungsformen ist die Gehäuse-Vorspannkörper-Verbindung 20.5 eine Schweissverbindung.

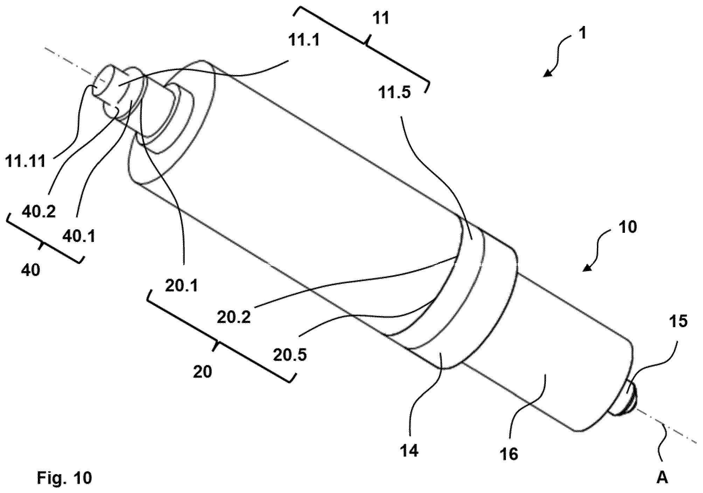

In einem zweiten Schritt des erfindungsgemässen Verfahrens gemäss Fig. 10 wird ein Dichtelement 40 bereitgestellt und entlang der Längsachse A über das distale Stempelende 11.1 geschoben und auf das Gehäuse 20 gesetzt. Das distale Stempelende 11.1 ragt dadurch durch die Torusöffnung 40.2.

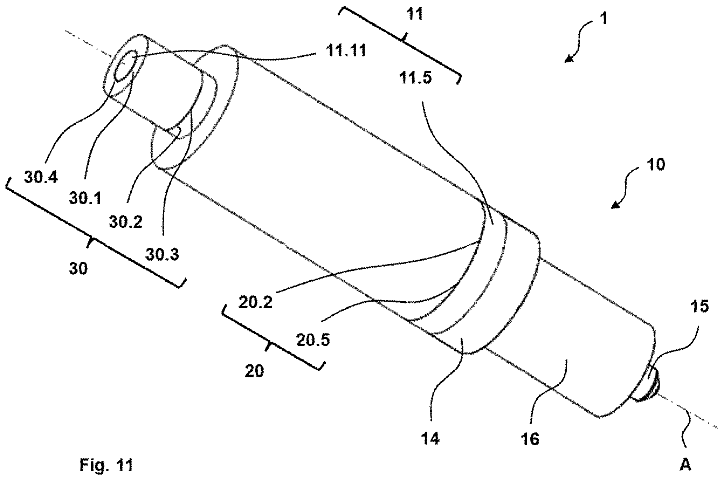

In einem dritten Schritt des erfindungsgemässen Verfahrens gemäss Fig. 11 wird eine Hülse 30 bereitgestellt und entlang der Längsachse A über das distale Stempelende 11.1 geschoben und auf das Dichtelement 40 und das Gehäuse 20 gesetzt. Das proximale Hülsenende 30.2 sitzt auf dem distalen Gehäuseende 20.1. Die so auf das Gehäuse 20 gesetzte Hülse 30 wird über die Hülse-Gehäuse-Verbindung 30.3 am Gehäuse 20 befestigt. Das Dichtelement 40 wird durch die aufgesetzte Hülse 30 und das Gehäuse 20 vorgepresst.

### Bezugszeichenliste

- 1: Drucksensor
- 11: Stempeleinheit
- 11.1: distales Stempelende
- 11.11: Druckaufnahmefläche
- 11.2: proximales Stempelende
- 11.3: Vorspannhülse
- 11.4: Vorspannhülsenraum
- 11.5: Vorspannkörper
- 12: Messelement
- 14: Buchseneinheit
- 10: Sensoreinheit
- 13: Elektrodenanordnung
- 15: Buchsenkontakt
- 16: Isolationskörper
- 20: Gehäuse
- 20.1: distales Gehäuseende
- 20.2: proximales Gehäuseende
- 20.3: Gehäuseinnenraum
- 20.4: Gehäuseöffnung
- 20.5: Gehäuse-Vorspannkörper-Verbindung
- 30: Hülse
- 30.1: distales Hülsenende
- 30.2 30.3: proximales Hülsenende Hülse-Gehäuse-Verbindung
- 30.4 50: Spalt
- 40: Dichtelement
- 40.1: torusförmiger Dichtkörper
- 40.2: Torusöffnung Nut
- 50.1: erste Nutenwand
- 50.2: zweite Nutenwand
- 50.3: dritte Nutenwand
- A: Längsachse
- B: Druckaufnahmeebene
- C: Druckraum
- H: Bohrung
- M: Medium
- P: Druck
- S: Messsignal
- T: Temperatur
- W: Wandung

## Patentansprüche

1. Drucksensor (1) mit einem Gehäuse (20), einer Stempeleinheit (11) und einem Messelement (12); welches Gehäuse (20) einen Gehäuseinnenraum (20.3) aufweist und welche Stempeleinheit (11) und welches Messelement (12) im Gehäuseinnenraum (20.3) angeordnet sind; welche Stempeleinheit (11) ein distales Stempelende (11.1) und ein proximales Stempelende (11.2) aufweist, wobei das distale Stempelende (11.1) auf einer Längsachse (A) des Drucksensors (1) weiter entfernt als das proximale Stempelende (11.2) vom Messelement (12) angeordnet ist und welches distale Stempelende (11.1) aus dem Gehäuse (20) ragt, welches proximale Stempelende (11.2) mit dem Messelement (12) in Wirkverbindung steht und einen ausserhalb des Gehäuses (20) herrschender Druck (P) eines Mediums (M) auf das Messelement (12) überträgt;
wobei der Drucksensor (1) eine Hülse (30) aufweist, welche Hülse (30) am Gehäuse (20) befestigt ist;
wobei die Hülse (30) und das distale Stempelende (11.1) durch einen Spalt (30.4) voneinander beabstandet sind;
wobei der Drucksensor (1) mindestens ein Dichtelement (40) aufweist, welches Dichtelement (40) den Spalt (30.4) für das Medium (M) zum Gehäuseinnenraum (20.3) per Dichtpressung abdichtet;
**dadurch gekennzeichnet,**
**dass** die Stempeleinheit (11) eine Vorspannhülse (11.3) und einen Vorspannkörper (11.5) aufweist; dass das proximale Stempelende (11.2) in die Vorspannhülse (11.3) übergeht; dass die Vorspannhülse (11.3) einen Vorspannhülsenraum (11.4) umschliesst, in welchem Vorspannhülsenraum (11.4) das Messelement (12) angeordnet ist; dass ein vom proximalen Stempelende (11.2) abgewandtes Ende der Vorspannhülse (11.3) am Vorspannkörper (11.5) befestigt ist; und dass das Messelement (12) auf der Längsachse (A) zwischen dem proximalen Stempelende (11.2) und dem Vorspannkörper (11.5) unter mechanischer Vorspannung angeordnet ist.

2. Drucksensor (1) nach Anspruch 1, **dadurch gekennzeichnet, dass** das Dichtelement (40) torusförmig ist und aus elastisch dichtendem Material wie Elastomer, insbesondere aus Fluorelastomer oder aus Perfluorelastomer, oder aus Kautschuk, insbesondere aus Acrylnitril-Butadien-Kautschuk besteht.

3. Drucksensor (1) nach Anspruch 2, **dadurch gekennzeichnet, dass** das Dichtelement (40) einen torusförmigen Dichtkörper (40.1) und eine Torusöffnung (40.2) aufweist, welcher torusförmige Dichtkörper (40.1) die Torusöffnung (40.2) umschliesst; und dass das distale Stempelende (11.1) durch die Torusöffnung (40.2) ragt.

4. Drucksensor (1) nach einem der Ansprüche 1 bis 3, **dadurch gekennzeichnet, dass** die Hülse (30) und das Gehäuse (20) bezüglich der Längsachse (A) radial innenseitig eine Nut (50) bilden; und dass das Dichtelement (40) in der Nut (50) angeordnet ist.

5. Drucksensor (1) nach Anspruch 4, **dadurch gekennzeichnet, dass** die Nut (50) mehrere Nutenwände (50.1, 50.2, 50.3) aufweist; dass die Nutenwände (50.1, 50.2, 50.3) eine Vorpressung auf das in der Nut (50) angeordnete Dichtelement (40) ausüben; und dass der Druck (P) im Spalt (30.4) zusätzlich zur Vorpressung als Druckpressung auf das Dichtelement (40) wirkt, welche Vorpressung und welche Druckpressung die Dichtpressung bilden.

6. Drucksensor (1) nach Anspruch 4, **dadurch gekennzeichnet, dass** das Gehäuse (20) ein distales Gehäuseende (20.1) und ein proximales Gehäuseende (20.2) aufweist, welches distale Gehäuseende (20.1) entlang der Längsachse (A) weiter entfernt als das proximale Gehäuseende (20.2) vom Messelement (12) angeordnet ist; dass die Hülse (30) ein distales Hülsenende (30.1) und ein proximales Hülsenende (30.2) aufweist, welches distale Hülsenende (30.1) entlang der Längsachse (A) weiter entfernt als das proximale Hülsenende (30.2) vom Messelement (12) angeordnet ist; und dass die Nut (50) im Bereich des distalen Gehäuseendes (20.1) und des proximales Hülsenendes (30.2) angeordnet ist.

7. Drucksensor (1) nach Anspruch 6, **dadurch gekennzeichnet, dass** die Nut (50) mehrere Nutenwände (50.1, 50.2, 50.3) aufweist, von denen mindestens eine Nutenwand (50.1, 50.2) Teil des proximalen Hülsenendes (30.2) ist und von denen mindestens eine Nutenwand (50.2, 50.3) Teil des distalen Gehäuseendes (20.1) ist.

8. Drucksensor (1) nach Anspruch 7, **dadurch gekennzeichnet, dass** die Nut (50) im Querschnitt rechteckig oder dreieckig oder trapezförmig oder rund oder halbrund ist.

9. Drucksensor (1) nach einem der Ansprüche 1 bis 8, **dadurch gekennzeichnet, dass** der Drucksensor (1) über das Gehäuse (20) in einer Bohrung (H) einer Wandung (W) eines Druckraumes (C) befestigbar ist; dass der Druckraum (C) in einem Spritzgiesswerkzeug oder in einem Verbrennungsmotor angeordnet ist; und dass der Druck (P) im Bereich von 50 bar bis 5000 bar liegt.

10. Verfahren zur Fertigung eines Drucksensors (1), mit einem Gehäuse (20), einer Stempeleinheit (11) und einem Messelement (12); welches Gehäuse (20) einen Gehäuseinnenraum (20.3) aufweist und welche Stempeleinheit (11) und welches Messelement (12) im Gehäuseinnenraum (20.3) angeordnet sind; welche Stempeleinheit (11) ein distales Stempelende (11.1) und ein proximales Stempelende (11.2) aufweist; wobei das distale Stempelende (11.1) auf einer Längsachse (A) des Drucksensors (1) weiter entfernt als das proximale Stempelende (11.2) vom Messelement (12) angeordnet ist und welches distale Stempelende (11.1) aus dem Gehäuse (20) ragt, welches proximale Stempelende (11.2) mit dem Messelement (12) in Wirkverbindung steht und einen ausserhalb des Gehäuses (20) herrschender Druck (P) eines Mediums (M) auf das Messelement (12) überträgt;
**dadurch gekennzeichnet,**
**dass** in einem ersten Schritt des Verfahrens das Gehäuse (20) und eine Sensoreinheit (10) mit einer Stempeleinheit (11) und einem Messelement (12) bereitgestellt werden, und dass das Gehäuse (20) entlang einer Längsachse (A) über die Stempeleinheit (11) geschoben und auf die Sensoreinheit (10) gesetzt wird;
**dass** in einem zweiten Schritt des Verfahrens mindestens ein Dichtelement (40) bereitgestellt wird, und dass das Dichtelement (40) entlang der Längsachse (A) über das distale Stempelende (11.1) geschoben und auf das Gehäuse (20) gesetzt wird; und
**dass** in einem dritten Schritt des Verfahrens eine Hülse (30) bereitgestellt wird und entlang der Längsachse (A) über das distale Stempelende (11.1) geschoben und auf das Dichtelement (40) und das Gehäuse (20) gesetzt wird, welche Hülse (30) und welches distale Stempelende (11.1) durch einen Spalt (30.4) voneinander beabstandet sind, welches Dichtelement (40) den Spalt (30.4) für ein sich ausserhalb des Gehäuses (20) befindliches Medium (M) zum Gehäuseinnenraum (20.3) per Dichtpressung abdichtet,
welche Stempeleinheit (11) eine Vorspannhülse (11.3) und einen Vorspannkörper (11.5) aufweist; welches proximale Stempelende (11.2) in die Vorspannhülse (11.3) übergeht; welche Vorspannhülse (11.3) einen Vorspannhülsenraum (11.4) umschliesst, in welchem Vorspannhülsenraum (11.4) das Messelement (12) angeordnet ist; wobei ein vom proximalen Stempelende (11.2) abgewandtes Ende der Vorspannhülse (11.3) am Vorspannkörper (11.5) befestigt ist; und wobei das Messelement (12) auf der Längsachse (A) zwischen dem proximalen Stempelende (11.2) und dem Vorspannkörper (11.5) unter mechanischer Vorspannung angeordnet ist.

11. Verfahren nach Anspruch 10, **dadurch gekennzeichnet, dass** im ersten Schritt des Verfahrens das auf den Vorspannkörper (11.5) gesetzte Gehäuse (20) über eine Gehäuse-Vorspannkörper-Verbindung (20.5) am Vorspannkörper (11.5) befestigt wird; welche Gehäuse-Vorspannkörper-Verbindung (20.5) bezüglich der Längsachse (A) radial aussenseitig am Gehäuse (20) und am Vorspannkörper (11.5) angeordnet ist.

12. Verfahren nach einem der Ansprüche 10 oder 11, **dadurch gekennzeichnet, dass** im dritten Schritt des Verfahrens durch das Aufsetzen der Hülse (30) auf das Gehäuse (20) um das Dichtelement (40) bezüglich der Längsachse (A) radial innenseitig an der Hülse (30) und am Gehäuse (20) eine Nut (50) gebildet wird.

13. Verfahren nach einem der Ansprüche 10 bis 12, **dadurch gekennzeichnet, dass** im dritten Schritt des Verfahrens das Dichtelement (40) durch die aufgesetzte Hülse (30) und das Gehäuse (20) vorgepresst wird.

14. Verfahren nach einem der Ansprüche 10 bis 13, **dadurch gekennzeichnet, dass** im dritten Schritt des Verfahrens die auf das Gehäuse (20) gesetzte Hülse (30) über eine Hülse-Gehäuse-Verbindung (30.3) am Gehäuse (20) befestigt wird, welche Hülse-Gehäuse-Verbindung (30.3) bezüglich der Längsachse (A) radial aussenseitig an der Hülse (30) und am Gehäuse (20) angeordnet ist.

## Claims

1. Pressure sensor (1) with a housing (20), a plunger unit (11) and a measuring element (12); which housing (20) comprises a housing interior (20.3) and which plunger unit (11) and which measuring element (12) are arranged in the housing interior (20.3); which plunger unit (11) comprises a distal plunger end (11.1) and a proximal plunger end (11.2), wherein the distal plunger end (11.1) is arranged on a longitudinal axis (A) of the pressure sensor (1) further away from the measuring element (12) than the proximal plunger end (11.2) and which distal plunger end (11.1) protrudes from the housing (20), which proximal plunger end (11.2) is in operative connection with the measuring element (12) and transmits a pressure (P) of a medium (M) prevailing outside the housing (20) to the measuring element (12);
wherein the pressure sensor (1) comprises a sleeve (30), which sleeve (30) is fastened to the housing (20);
wherein the sleeve (30) and the distal plunger end (11.1) are spaced apart from one another by a gap (30.4);
wherein the pressure sensor (1) comprises at least one sealing element (40), which sealing element (40) seals the gap (30.4) for the medium (M) to the housing interior (20.3) by means of a sealing pressure;
**characterized in that** the plunger unit (11) comprises a pre-load sleeve (11.3) and a pre-load body (11.5); **in that** the proximal plunger end (11.2) merges into the pre-load sleeve (11.3); **in that** the pre-load sleeve (11.3) encloses a pre-load sleeve chamber (11.4), in which pre-load sleeve chamber (11.4) the measuring element (12) is arranged; **in that** an end of the pre-load sleeve (11.3) facing away from the proximal plunger end (11.2) is fastened to the pre-load body (11.5); and **in that** the measuring element (12) is arranged on the longitudinal axis (A) between the proximal plunger end (11.2) and the pre-load body (11.5) under mechanical pre-load.

2. Pressure sensor (1) according to claim 1, **characterized in that** said sealing element (40) is toroidal in shape and consists of elastically sealing material such as elastomer, in particular fluoroelastomer or perfluoroelastomer, or rubber, in particular acrylonitrile-butadiene rubber.

3. Pressure sensor (1) according to claim 2, **characterized in that** said sealing element (40) comprises a toroidal sealing body (40.1) and a torus opening (40.2), which toroidal sealing body (40.1) encloses the torus opening (40.2); and **in that** the distal plunger end (11.1) protrudes through the torus opening (40.2).

4. Pressure sensor (1) according to any of the claims 1 to 3, **characterized in that** the sleeve (30) and the housing (20) form a groove (50) on the radially inner side with respect to the longitudinal axis (A); and **in that** said sealing element (40) is arranged in the groove (50).

5. Pressure sensor (1) according to claim 4, **characterized in that** said groove (50) comprises a plurality of groove walls (50.1, 50.2, 50.3); **in that** said groove walls (50.1, 50.2, 50.3) exert a pre-compression on the sealing element (40) arranged in the groove (50); and **in that** the pressure (P) in the gap (30.4) acts on the sealing element (40) as a compression in addition to the pre-compression, which pre-compression and which compression form the sealing pressure.

6. Pressure sensor (1) according to claim 4, **characterized in that** said housing (20) comprises a distal housing end (20.1) and a proximal housing end (20.2), which distal housing end (20.1) is arranged along the longitudinal axis (A) further away from the measuring element (12) than the proximal housing end (20.2); **in that** said sleeve (30) comprises a distal sleeve end (30.1) and a proximal sleeve end (30.2), which distal sleeve end (30.1) is arranged along the longitudinal axis (A) further away from the measuring element (12) than the proximal sleeve end (30.2); and **in that** the groove (50) is arranged in the region of the distal housing end (20.1) and the proximal sleeve end (30.2).

7. Pressure sensor (1) according to claim 6, **characterized in that** the groove (50) comprises a plurality of groove walls (50.1, 50.2, 50.3), of which at least one groove wall (50.1, 50.2) is part of the proximal sleeve end (30.2) and of which at least one groove wall (50.2, 50.3) is part of the distal housing end (20.1).

8. Pressure sensor (1) according to claim 7, **characterized in that** the groove (50) is rectangular or triangular or trapezoidal or round or semicircular in cross-section.

9. Pressure sensor (1) according to any of the claims 1 to 8, **characterized in that** said pressure sensor (1) can be fastened via the housing (20) in a bore (H) of a wall (W) of a pressure chamber (C); **in that** said pressure chamber (C) is arranged in an injection mould or in an internal combustion engine; and **in that** the pressure (P) is in the range from 50 bar to 5000 bar.

10. Method for manufacturing a pressure sensor (1), comprising a housing (20), a plunger unit (11) and a measuring element (12); which housing (20) comprises a housing interior (20.3) and which plunger unit (11) and which measuring element (12) are arranged in the housing interior (20.3); which plunger unit (11) comprises a distal plunger end (11.1) and a proximal plunger end (11.2), wherein the distal plunger end (11.1) is arranged on a longitudinal axis (A) of the pressure sensor (1) further away from the measuring element (12) than the proximal plunger end (11.2) and which distal plunger end (11.1) protrudes from the housing (20), which proximal plunger end (11.2) is in operative connection with the measuring element (12) and transmits a pressure (P) of a medium (M) prevailing outside the housing (20) to the measuring element (12);
**characterized in that**
in a first step of the method, said housing (20) and a sensor unit (10) with a plunger unit (11) and a measuring element (12) are provided, and **in that** said housing (20) is pushed along the longitudinal axis (A) over the plunger unit (11) and placed on the sensor unit (10);
in a second step of the method, at least one sealing element (40) is provided, and **in that** said sealing element (40) is pushed along the longitudinal axis (A) over the distal plunger end (11.1) and placed on the housing (20); and
in a third step of the method, a sleeve (30) is provided and pushed along the longitudinal axis (A) over the distal plunger end (11.1) and placed on the sealing element (40) and the housing (20), which sleeve (30) and which distal plunger end (11.1) are spaced apart from one another by a gap (30.4), which sealing element (40) seals the gap (30.4) for the medium (M) to the housing interior (20.3) by a sealing pressure,
which plunger unit (11) comprises a pre-load sleeve (11.3) and a pre-load body (11.5); which said proximal plunger end (11.2) merges into the pre-load sleeve (11.3); which said pre-load sleeve (11.3) encloses a pre-load sleeve chamber (11.4), in which pre-load sleeve chamber (11.4) the measuring element (12) is arranged; wherein an end of the pre-load sleeve (11.3) facing away from the proximal plunger end (11.2) is fastened to the pre-load body (11.5); and wherein said measuring element (12) is arranged on the longitudinal axis (A) between the proximal plunger end (11.2) and the pre-load body (11.5) under mechanical pre-load.

11. Method according to claim 10, **characterized in that** in the first step of the method, the housing (20) placed on the pre-load body (11.5) is fastened to the pre-load body (11.5) via a housing pre-load body connection (20.5); which housing pre-load body connection (20.5) is arranged radially on the outside of the housing (20) and on the pre-load body (11.5) with respect to the longitudinal axis (A).

12. Method according to any of the claims 10 or 11, **characterized in that,** in the third step of the method, a groove (50) is formed radially on the inside of the sleeve (30) and the housing (20) with respect to the longitudinal axis (A) by placing the sleeve (30) on the housing (20) around the sealing element (40).

13. Method according to any of the claims 10 to 12, **characterized in that,** in the third step of the method, the sealing element (40) is pre-pressed through the superimposed sleeve (30) and the housing (20).

14. Method according to any of the claims 10 to 13, **characterized in that,** in the third step of the method, the sleeve (30) placed on the housing (20) is fastened to the housing (20) via a sleeve-housing connection (30.3), which sleeve-housing connection (30.3) is arranged radially on the outside of the sleeve (30) and on the housing (20) with respect to the longitudinal axis (A).

## Revendications

1. Capteur de pression (1) comprenant un boîtier (20), une unité de poussoir (11) et un élément de mesure (12) ; lequel boîtier (20) comprend un espace intérieur de boîtier (20.3) et laquelle unité de poussoir (11) et lequel élément de mesure (12) sont disposés dans l'espace intérieur de boîtier (20.3); laquelle unité de poussoir (11) comprend une extrémité distale de poussoir (11.1) et une extrémité proximale de poussoir (11.2), dans lequel l'extrémité distale de poussoir (11.1) est disposée sur un axe longitudinal (A) du capteur de pression (1) de manière plus éloignée de l'élément de mesure (12) que l'extrémité proximale de poussoir (11.2) et dans lequel ladite extrémité distale de poussoir (11.1) dépasse du boîtier (20), dans lequel ladite extrémité proximale de poussoir (11.2) est en connexion opérationnelle avec l'élément de mesure (12) et transmet une pression (P) d'un milieu (M) existant à l'extérieur du boîtier (20) à l'élément de mesure (12) ;
dans lequel ledit capteur de pression (1) comprend un manchon (30), lequel manchon (30) est fixé au boîtier (20) ;
dans lequel ledit manchon (30) et ladite extrémité distale de poussoir (11.1) sont séparés l'un de l'autre par un espace (30.4) ;
dans lequel ledit capteur de pression (1) comprend au moins un élément d'étanchéité (40), lequel élément d'étanchéité (40) étanche l'espace (30.4) contre le milieu (M) par rapport à l'intérieur du boîtier (20.3) au moyen d'une pression d'étanchéité ;
**caractérisé en ce que**
l'unité de poussoir (11) comprend un manchon de précontrainte (11.3) et un corps de précontrainte (11.5) ; **en ce que** l'extrémité proximale de poussoir (11.2) se fond dans le manchon de précontrainte (11.3) ; **en ce que** ledit manchon de précontrainte (11.3) renferme un espace de précontrainte (11.4), dans lequel espace de précontrainte (11.4) est disposé l'élément de mesure (12) ; **en ce qu'**une extrémité du manchon de précontrainte (11.3) opposée à l'extrémité proximale de poussoir (11.2) est fixée au corps de précontrainte (11.5) ; et **en ce que** l'élément de mesure (12) est disposé sur l'axe longitudinal (A) sous précontrainte mécanique entre l'extrémité proximale de poussoir (11.2) et le corps de précontrainte (11.5).

2. Capteur de pression (1) selon la revendication 1, **caractérisé en ce que** ledit élément d'étanchéité (40) est de forme toroïdale et constitué d'un matériau d'étanchéité élastique tel qu'un élastomère, en particulier un élastomère fluoré ou perfluoré, ou du caoutchouc, en particulier du caoutchouc acrylonitrile-butadiène.

3. Capteur de pression (1) selon la revendication 2, **caractérisé en ce que** ledit élément d'étanchéité (40) comprend un corps d'étanchéité (40.1) de forme toroïdale et une ouverture du tore (40.2), lequel corps d'étanchéité (40.1) de forme toroïdale entoure l'ouverture du tore (40.2) ; et **en ce que** l'extrémité distale de poussoir (11.1) fait saillie à travers l'ouverture du tore (40.2).

4. Capteur de pression (1) selon l'une quelconque des revendications 1 à 3, **caractérisé en ce que** ledit manchon (30) et ledit boîtier (20) forment une rainure (50) radialement à l'intérieur par rapport à l'axe longitudinal (A) ; et **en ce que** l'élément d'étanchéité (40) est disposé dans ladite rainure (50).

5. Capteur de pression (1) selon la revendication 4, **caractérisé en ce que** ladite rainure (50) comprend une pluralité de parois de rainure (50.1, 50.2, 50.3) ; **en ce que** lesdites parois de rainure (50.1, 50.2, 50.3) exercent une précontrainte sur l'élément d'étanchéité (40) disposé dans la rainure (50) ; et **en ce que**, outre cette précontrainte, la pression (P) dans l'espace (30.4) agisse sous forme de compression sur l'élément d'étanchéité (40), ladite précontrainte et ladite compression constituant la pression d'étanchéité.

6. Capteur de pression (1) selon la revendication 4, **caractérisé en ce que** ledit boîtier (20) comprend une extrémité distale de boîtier (20.1) et une extrémité proximale de boîtier (20.2), ladite extrémité distale de boîtier (20.1) étant disposée le long de l'axe longitudinal (A) de manière plus éloignée de l'élément de mesure (12) que l'extrémité proximale de boîtier (20.2) ; **en ce que** ledit manchon (30) comprend une extrémité distale de manchon (30.1) et une extrémité proximale de manchon (30.2), ladite extrémité distale de manchon (30.1) étant disposée le long de l'axe longitudinal (A) de manière plus éloignée de l'élément de mesure (12) que ladite extrémité proximale de manchon (30.2) ; et **en ce que** ladite rainure (50) est disposée à la zone de l'extrémité distale de boîtier (20.1) et de l'extrémité proximale de manchon (30.2).

7. Capteur de pression (1) selon la revendication 6, **caractérisé en ce que** ladite rainure (50) comprend une pluralité de parois de rainure (50.1, 50.2, 50.3) dont au moins une paroi de rainure (50.1, 50.2) fait partie de l'extrémité proximale de manchon (30.2) et dont au moins une paroi de rainure (50.2, 50.3) fait partie de l'extrémité distale de boîtier (20.1).

8. Capteur de pression (1) selon la revendication 7, **caractérisé en ce que** ladite rainure (50) est de section rectangulaire ou triangulaire ou trapézoïdale ou circulaire ou semi-circulaire.

9. Capteur de pression (1) selon l'une quelconque des revendications 1 à 8, **caractérisé en ce que** ledit capteur de pression (1) peut être fixé dans un alésage (H) d'une paroi (W) d'une chambre de pression (C) via le boîtier (20) ; **en ce que** ladite chambre de pression (C) est disposée dans un moule d'injection ou dans un moteur à combustion interne ; et **en ce que** la pression (P) est dans la plage de 50 bar à 5000 bar.

10. Procédé de fabrication d'un capteur de pression (1) comprenant un boîtier (20), une unité de poussoir (11) et un élément de mesure (12) ; lequel boîtier (20) comprend un espace intérieur de boîtier (20.3) et laquelle unité de poussoir (11) et lequel élément de mesure (12) sont disposés dans l'espace intérieur de boîtier (20.3) ; laquelle unité de poussoir (11) comprend une extrémité distale de poussoir (11.1) et une extrémité proximale de poussoir (11.2), dans lequel l'extrémité distale de poussoir (11.1) est disposée sur un axe longitudinal (A) du capteur de pression (1) de manière plus éloignée de l'élément de mesure (12) que l'extrémité proximale de poussoir (11.2) et dans lequel ladite extrémité distale de poussoir (11.1) dépasse du boîtier (20), dans lequel ladite extrémité proximale de poussoir (11.2) est en connexion opérationnelle avec l'élément de mesure (12) et transmet une pression (P) d'un milieu (M) existant à l'extérieur du boîtier (20) à l'élément de mesure (12) ;
**caractérisé en ce que**
dans une première étape du procédé, ledit boîtier (20) et une unité de capteur (10) comprenant une unité de poussoir (11) et un élément de mesure (12) sont prévus et **en ce que** le boîtier (20) est glissé sur l'unité de poussoir (11) le long d'un axe longitudinal (A) et placé sur l'unité de capteur (10) ;
dans une seconde étape du procédé, au moins un élément d'étanchéité (40) est prévu et **en ce que** ledit élément d'étanchéité (40) est glissé sur l'extrémité distale de poussoir (11.1) le long de l'axe longitudinal (A) et placé sur le boîtier (20) ; et
**en ce que**, dans une troisième étape du procédé, un manchon (30) est prévu et glissé sur l'extrémité distale de poussoir (11.1) le long de l'axe longitudinal (A) et placé sur l'élément d'étanchéité (40) et le boîtier (20), ledit manchon (30) et ladite extrémité distale de poussoir (11.1) étant espacés l'un de l'autre par un espace (30.4), lequel élément d'étanchéité (40) étanche l'espace (30.4) contre un milieu (M) situé à l'extérieur du boîtier vers l'espace intérieur du boîtier (20.3) par pression d'étanchéité,
laquelle unité de poussoir (11) comprend un manchon de précontrainte (11.3) et un corps de précontrainte (11.5) ; laquelle extrémité proximale de poussoir (11.2) se fond dans le manchon de précontrainte (11.3) ; lequel manchon de précontrainte (11.3) renferme un espace de manchon de précontrainte (11.4), dans lequel espace de manchon de précontrainte (11.4) est disposé l'élément de mesure (12) ; dans lequel une extrémité du manchon de précontrainte (11.3) opposée à l'extrémité proximale de poussoir (11.2) est fixée au corps de précontrainte (11.5) ; et dans lequel l'élément de mesure (12) est disposé sur l'axe longitudinal (A) sous précontrainte mécanique entre l'extrémité proximale de poussoir (11.2) et le corps de précontrainte (11.5).

11. Procédé selon la revendication 10, **caractérisé en ce que,** dans la première étape du procédé, le boîtier (20) placé sur le corps de précontrainte (11.5) est fixé au corps de précontrainte (11.5) par une liaison boîtier/corps de précontrainte (20.5) ; laquelle liaison boîtier/corps de précontrainte (20.5) est disposée au boîtier (20) et au corps de précontrainte (11.5) radialement à l'extérieur de ceux-ci par rapport à l'axe longitudinal (A).

12. Procédé selon l'une quelconque des revendications 10 ou 11, **caractérisé en ce que,** dans la troisième étape du procédé, en plaçant le manchon (30) sur le boîtier (20) autour de l'élément d'étanchéité (40) on forme une rainure (50) au manchon (30) et au boîtier (20) radialement à l'intérieur de ceux-ci par rapport à l'axe longitudinal (A).

13. Procédé selon l'une quelconque des revendications 10 à 12, **caractérisé en ce que,** dans la troisième étape du procédé, ledit élément d'étanchéité (40) est précomprimé par le manchon placé (30) et le boîtier (20).

14. Procédé selon l'une quelconque des revendications 10 à 13, **caractérisé en ce que,** dans la troisième étape du procédé, le manchon (30) placé sur le boîtier (20) est fixé au boîtier (20) par une liaison manchon/boîtier (30.3), laquelle liaison manchon/boîtier (30.3) est disposée au manchon (30) et au boîtier (20) radialement à l'extérieur de ceux-ci par rapport à l'axe longitudinal (A).
